(19) Europäisches Patentamt
European Patent Office
Office européen des brevets

(11) **EP 3 672 059 B1**

(12) **FASCICULE DE BREVET EUROPEEN**

(45) Date de publication et mention
de la délivrance du brevet:
**16.02.2022 Bulletin 2022/07**

(21) Numéro de dépôt: **19212495.6**

(22) Date de dépôt: **29.11.2019**

(51) Classification Internationale des Brevets (IPC):
***H02P 3/18*** *(2006.01)*

(52) Classification Coopérative des Brevets (CPC):
**H02P 3/18**

(54) **ADAPTATION DE LA DÉCÉLÉRATION D'UN MOTEUR EN FONCTION D'UNE TENSION REDRESSÉE MOYENNE**

ANPASSUNG DER ABBREMSUNG EINES MOTORS ALS EINE FUNKTION EINER DURCHSCHNITTLICHEN GLEICHGERICHTETEN SPANNUNG

ADAPTING THE DECELERATION OF A MOTOR AS A FUNCTION OF AN AVERAGE RECTIFIED VOLTAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2018 FR 1873755**

(43) Date de publication de la demande:
**24.06.2020 Bulletin 2020/26**

(73) Titulaire: **Schneider Toshiba Inverter Europe SAS 27120 Pacy sur Eure (FR)**

(72) Inventeurs:
 • **MALRAIT, François**
 **27120 Jouy sur Eure (FR)**

 • **DUTREY, Alain**
 **27120 Fontaine sous Jouy (FR)**

(74) Mandataire: **van Buul, Bastiaan Richard Marinus Schneider Electric Industries SAS Service de la Propriété Industrielle 35 rue Joseph Monier CS30323 92506 Rueil Malmaison Cedex (FR)**

(56) Documents cités:
 **EP-A2- 1 914 428      JP-A- 2008 043 013 US-B1- 10 008 937**

**Description**

**Domaine technique de l'invention**

L'invention concerne le pilotage de l'alimentation électrique d'un dispositif tel qu'un moteur, et notamment le pilotage de la tension de commande d'un variateur de vitesse d'un moteur.

**Etat de la technique**

Selon une topologie de puissance d'un variateur de vitesse, une haute tension est fournie en mettant en série un certain nombre de convertisseurs basse tension (que l'on nomme alors « *cellules de puissance* » ou "*power cell*" en anglais) dans le variateur. La commande de ces cellules de puissance permet de fournir une tension à plusieurs niveaux, ou multi-niveaux, chaque cellule de puissance ajoutant une tension permettant d'atteindre des niveaux de tension successifs.

On entend par basse tension, selon les normes européennes, des tensions comprises entre 0 et 1000 volts en régime de tension alternative et entre 0 et 1500 volts en régime de tension continue. On entend par haute tension, des tensions supérieures à 1000 volts en régime de tension alternative et supérieures à 1500 volts en régime de tension continue.

Un variateur basse tension peut posséder une structure similaire mais avec une unique cellule de puissance.

Une décélération consiste en un transfert d'énergie d'un système mécanique (arbre de rotor du moteur et charge entrainante) à un système électrique (capacités du variateur de vitesse). La somme des dérivées temporelles des énergies électrique et mécanique du système (donc des puissances correspondantes) est donc égale à l'opposé de la puissance perdue par le système.

Lorsque le moteur est l'actionneur d'une charge entrainante ou inertielle, en phase de décélération, l'une des situations suivantes se présente:

- la puissance mécanique fournie est supérieure aux pertes électriques totales, et il est nécessaire de dissiper l'excédent d'énergie. L'énergie électrique peut alors être renvoyée sur le réseau électrique, sur le variateur de vitesse ou, alternativement, une résistance de freinage peut être utilisée pour dissiper thermiquement l'énergie électrique. En basse tension, une résistance de freinage peut être placée en série à l'extérieur du variateur de vitesse, entre le variateur et le moteur. En moyenne/haute tension, une telle résistance est inutilisable en ce qu'elle serait trop encombrante ;
- la puissance mécanique fournie est inférieure aux pertes électriques totales (fonctionnement moteur) ;
- la puissance mécanique fournie est égale aux pertes électriques (pertes totales nulles).

Le moteur fournit donc une puissance de freinage et il n'est nul besoin de dissiper de l'énergie.

Afin de gérer une phase de décélération, plusieurs stratégies existent. En phase de décélération, le moteur peut passer en mode générateur et renvoyer de l'énergie électrique vers le variateur. La tension sur chaque cellule de puissance augmente ainsi, et nécessite d'être contrôlée afin d'éviter d'endommager voire de détruire les capacités des cellules de puissance.

La plupart des stratégies sont par conséquent basées sur une mesure des tensions bus courant continu, DC. Ces tensions correspondent aux tensions redressées à l'entrée de chacune des cellules de puissance du variateur de vitesse. Selon ces solutions, les tensions redressées sont asservies et la variable de commande du variateur de vitesse devient le couple de sortie du moteur. Par exemple, en fixant la tension bus DC maximale à 800V, on fait décélérer le moteur jusqu'à approcher une telle valeur, puis la tension redressée est régulée en dessous de cette valeur en abaissant le couple moteur.

Toutefois, il est encombrant et coûteux de mesurer de telles tensions redressées sur chacune des cellules de puissance. Des solutions prévoient alors, sans accéder à ces tensions, de fixer la durée de décélération à une valeur très élevée, de manière à ne pas provoquer de surtension sur les capacités des cellules de puissance, évitant ainsi de les endommager. Toutefois, la décélération du moteur est alors extrêmement lente, ce qui n'est pas acceptable dans le cadre de certaines applications. Le document US10008937 décrit un procédé d'adaptation d'une décélération d'un moteur suivant le préambule de la revendication 1 et un dispositif de commande pour l'adaptation de la décélération d'un moteur suivant le préambule de la revendication 11.

Il existe donc un besoin de décélérer un moteur de manière rapide, sans système de dissipation d'énergie et en protégeant les capacités des cellules de puissance du variateur de vitesse.

La présente invention résout les inconvénients mentionnés ci-dessus.

## Exposé de l'invention

Un premier aspect de l'invention concerne un procédé d'adaptation d'une décélération d'un moteur alimenté par un variateur de vitesse, le variateur de vitesse comprenant une pluralité d'au moins N cellules de puissance basse tension reliées en série, N étant supérieur ou égal à 1, le procédé comprenant les opérations suivantes lors d'une période de décélération du moteur :

détermination d'au moins une tension moteur moyenne sur une période donnée en fonction de valeurs de tensions moteur mesurées aux bornes du moteur sur la période donnée ;

en fonction de la tension moteur moyenne déterminée, détermination d'une valeur de tension redressée moyenne, dans lequel une tension redressée correspond à une tension obtenue en sortie d'un redresseur de chaque cellule de puissance;

adaptation de la décélération du moteur en fonction de la valeur de tension redressée moyenne.

Ainsi, l'invention permet d'accéder à la tension redressée (une valeur moyenne) sans nécessiter de capteurs sur chaque cellule de puissance.

Selon un mode de réalisation, la détermination de la valeur de tension redressée moyenne est fonction de la tension moteur moyenne, d'une tension moteur de référence et d'une tension redressée de référence, la tension moteur de référence étant issue d'une commande reçue en entrée du variateur de vitesse et la tension redressée de référence étant une valeur par défaut.

Un tel mode de réalisation permet d'accéder rapidement à la valeur de tension redressée moyenne.

En variante, le procédé peut comprendre la détermination d'au moins une tension moteur de référence, la tension moteur de référence peut être asservie à la tension moteur moyenne mesurée par génération d'une tension moteur de correction, une tension moteur de contrôle étant obtenue à partir de la tension moteur de référence et de la tension de correction, la tension redressée moyenne peut être obtenue à partir de la tension moteur moyenne, de la tension moteur de contrôle et d'une tension redressée de référence, la tension redressée de référence étant une valeur par défaut.

Ce mode de réalisation permet d'accéder à la valeur de tension redressée moyenne tout en asservissant la tension moteur de référence.

Selon un mode de réalisation, l'adaptation de la décélération comprend la comparaison de la tension redressée moyenne avec au moins un seuil prédéfini, et la modification d'un couple appliqué au moteur en fonction d'un résultat de la comparaison.

Ainsi, le contrôle de la décélération du moteur est optimisé.

En complément, le seuil peut être prédéfini en fonction d'une tension maximale des capacités des cellules de puissance du variateur de vitesse.

Ainsi, ce mode de réalisation permet d'assurer la protection des cellules de puissance.

Selon un mode de réalisation, l'adaptation de la décélération peut comprendre le remplacement, pour une période suivante, d'une tension redressée de référence par la tension redressée moyenne afin de déterminer des ordres de commande des cellules de puissance du variateur de vitesse, la tension redressée de référence étant une valeur par défaut.

Ainsi, le contrôle des cellules de puissance est optimisé lors de la réalisation des tensions moteur.

Selon un mode de réalisation, la période donnée peut être égale à une période d'échantillonnage d'une tension moteur de référence en entrée du variateur de vitesse.

Une telle synchronisation permet de faciliter la détermination de la tension redressée moyenne.

Selon un mode de réalisation, le variateur de vitesse peut comprendre 3*N cellules de puissance, avec trois phases comprenant chacune N cellules de puissance reliées en série, des sorties respectives de chaque phase peuvent être reliées en étoile ou en triangle au moteur électrique.

En complément, des ordres de commande des cellules de puissance peuvent être déterminées à partir d'une tension moteur de référence et à partir d'une tension additionnelle de stratégie commune aux trois phases, la tension additionnelle de stratégie étant déterminée de manière à minimiser un nombre de commutations d'interrupteurs des cellules de puissance.

Ainsi, le nombre de commutation d'interrupteurs des cellules de puissance peut être minimisé sans changer les tensions appliquées au moteur.

Un deuxième aspect de l'invention concerne un programme d'ordinateur exécutable par un processeur et comprenant des instructions pour, lorsqu'il est exécuté par le processeur, mettre en œuvre les étapes d'un procédé selon le premier aspect de l'invention.

Un troisième aspect de l'invention concerne un dispositif de commande pour l'adaptation de la décélération d'un moteur alimenté par un variateur de vitesse, le variateur de vitesse comprenant N cellules de puissance basse tension reliées en série, N étant supérieur ou égal à 1. Le dispositif de commande comprend :

une unité configurée pour, lors d'une période de décélération du moteur, déterminer d'au moins une tension moteur moyenne sur une période donnée en fonction de valeurs de tensions moteur mesurées aux bornes du moteur sur la période donnée ;
une unité configurée pour déterminer, en fonction de la tension moteur moyenne déterminée, une valeur de tension redressée moyenne, dans lequel une tension redressée correspond à une tension obtenue en sortie d'un redresseur de chaque cellule de puissance;
une unité configurée pour adapter a décélération du moteur en fonction de la valeur de tension redressée moyenne.

**Brève description des figures**

A titre d'exemple seulement, les modes de réalisations de l'invention seront décrits en référence aux dessins, parmi lesquels :

[FIG.1] - la figure 1 illustre un système de pilotage de l'alimentation d'un moteur électrique selon un mode de réalisation de l'invention ;
[FIG. 2] - la figure 2 illustre la structure d'un dispositif de commande selon des modes de réalisation de l'invention ;
[FIG. 3] - la figure 3 illustre la structure des unités du dispositif de commande selon des modes de réalisation de l'invention ;
[FIG. 4] - la figure 4 illustre la synchronisation entre la réalisation des tensions moteur et le calcul de la tension redressée moyenne du variateur de vitesse, selon des modes de réalisation de l'invention ;
[FIG. 5] - la figure 5 est un diagramme illustrant les étapes d'un procédé selon des modes de réalisation de l'invention.

**Description détaillée**

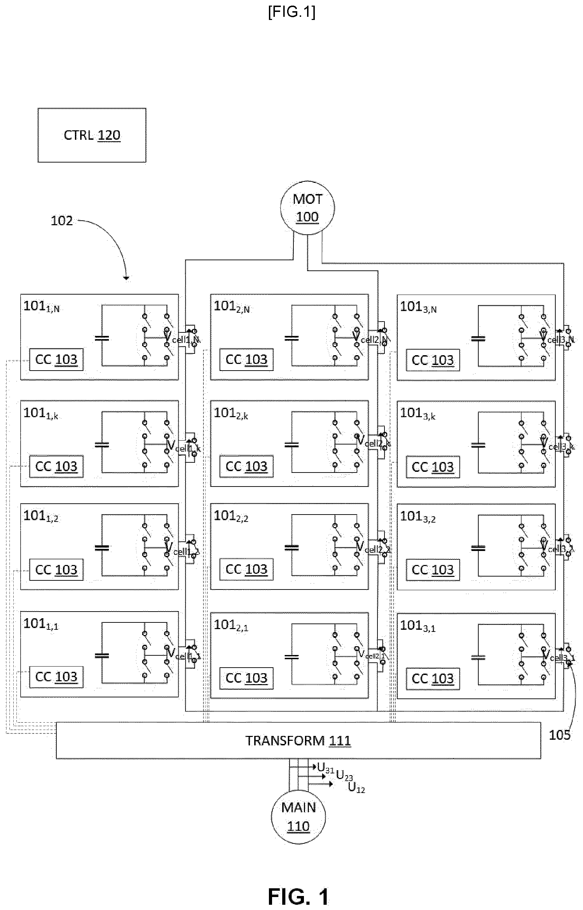

La figure 1 présente un système d'alimentation d'un moteur électrique 100, tel qu'un moteur à induction par exemple, alimenté par une alimentation variable triphasée.

Le variateur de vitesse 102 comprend un transformateur 111 recevant une alimentation variable triphasée du secteur 110. Le secondaire du transformateur 111 est relié à un étage de puissance du variateur de vitesse 102. Le transformateur 111 peut être un transformateur à multi-enroulements de manière à délivrer des tensions à plusieurs cellules de puissance décrites ci-après.

L'étage de puissance du variateur de vitesse 102 peut comprendre une ou plusieurs cellules de puissance basse tension 101. Dans le cas où le moteur reçoit une alimentation triphasée, le variateur de vitesse 102 comprend 3*N cellules de puissance, avec N cellules de puissance dédiées à chaque phase, N étant supérieur ou égal à 1.

Dans le cas où N est égal à 1, le variateur de vitesse 102 est un variateur basse tension.

Chaque cellule de puissance 101 reçoit en entrée l'alimentation triphasée issue du secondaire du transformateur 111 et peut comprendre un redresseur (non représenté sur la figure 1) en entrée, le redresseur étant apte à redresser l'alimentation variable triphasée reçue de manière à fournir une tension continue. La tension redressée obtenue pour chaque cellule de puissance 101 est aussi appelée tension bus courant continu, DC, ou tension bus. Le redresseur peut comprendre un pont de diodes, un pont à thyristors ou tout autre système connu pour redresser des tensions variables triphasées. Le redresseur en entrée est ainsi un convertisseur AC/DC.

Chaque cellule de puissance comprend ensuite une capacité apte à mettre en œuvre un filtrage capacitif intermédiaire.

En sortie du redresseur, chaque cellule de puissance 101 peut comprendre un onduleur pour la génération d'un signal de modulation à largeur d'impulsions PWM (pour « *Pulse Width Modulation* » en anglais). Un tel onduleur peut comprendre un pont en H comprenant quatre interrupteurs commandés deux par deux. Un système d'électronique de puissance utilisant un tel principe de tension hachée applique au moteur 120, par phase, une tension qui est proportionnelle à une ou plusieurs tensions redressées. En moyenne, la proportion appliquée correspond au ratio entre la tension de commande et la tension redressée de référence (définie ci-après). Le fonctionnement d'un pont en H est bien connu et ne sera pas décrit davantage dans la présente demande.

Les interrupteurs d'une cellule de puissance 101 sont contrôlés par une cellule de commande 103 de la cellule de puissance 101.

Le système comprend en outre un dispositif de commande 120 apte à piloter l'alimentation électrique du moteur 100. A cet effet, le dispositif de commande 120 peut commander les cellules de commande 103 des cellules de puissance 101. Le dispositif de commande 120 peut en outre commander des interrupteurs 105 permettant de mettre en série un sous-ensemble des N cellules de puissance pour chaque phase. En variante, ces interrupteurs sont commandés par le dispositif de commande 120 par l'intermédiaire des cellules de commande 103.

Les cellules de commande 103 peuvent recevoir des ordres de commande depuis le dispositif de commande 120 à partir desquels les cellules de commande 103 peuvent appliquer une proportion, ou rapport cyclique, à la tension redressée, en commandant les interrupteurs du pont en H. Les interrupteurs du pont en H peuvent être des transistors de type transistors bipolaires à grille isolée IGBT (pour « *Insulated Gate Bipolar Transistor* » en anglais). L'avantage de transistors de type IGBT est qu'ils ont une vitesse de commutation élevée.

Les tensions triphasées alimentant le moteur 100 sont ainsi obtenues en sommant les tensions de sortie PWM des cellules de puissance 101 pour lesquelles les interrupteurs 105 sont fermés.

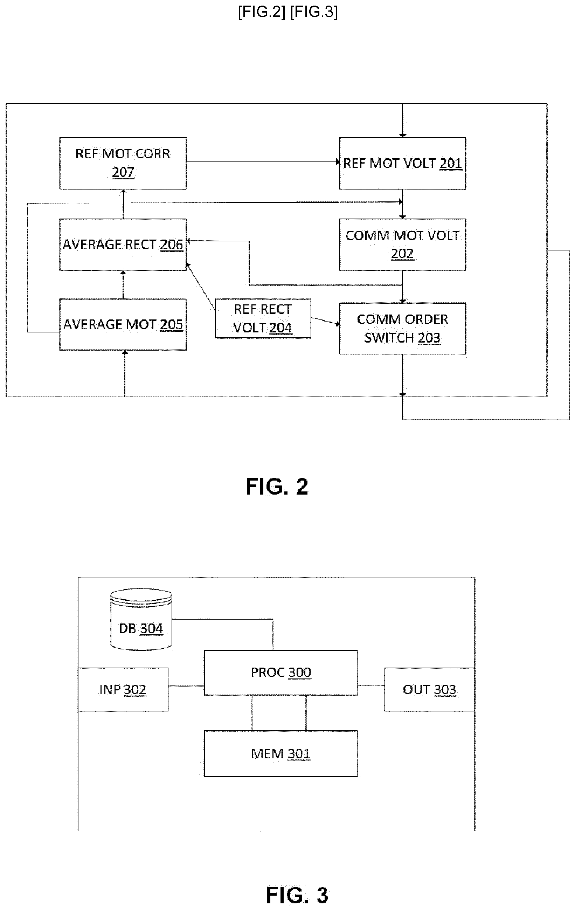

D'autres fonctions du dispositif de commande seront détaillées en référence aux figures 2 à 4.

La figure 2 présente un dispositif de commande 120 selon certains modes de réalisation de l'invention.

Le dispositif de commande 120 comprend à cet effet une pluralité d'unités dédiées à des fonctions complémentaires selon l'invention. Chaque unité peut être implémentée de manière logicielle, impliquant a minima un processeur et une mémoire, ou par un ensemble monolithique de composants électroniques programmé pour une fonction donnée, tel qu'un microprocesseur ou ASIC par exemple. En variante, un unique processeur ou un unique ensemble monolithique est configuré pour mettre en œuvre l'ensemble des fonctions complémentaires du dispositif de commande 120 selon l'invention.

Le dispositif de commande 120 reçoit en entrée une commande de vitesse (en particulier une commande de décélération dans le contexte de l'invention) qui est traitée par une unité de calcul de tensions moteur de référence 201, configurée pour calculer des tensions moteur de référence à partir de la commande de vitesse. Les tensions moteur de référence peuvent être représentées par un vecteur V123REF de trois tensions notées V1REF, V2REF et V3REF (une pour chaque phase).

A partir des tensions moteur de référence V123REF, une unité de calcul des tensions moteur de commande 202 est configurée pour calculer des tensions moteur de contrôle. Les tensions moteur de contrôle peuvent être représentées par un vecteur V123CONTROL de trois tensions notées V1CONTROL, V2CONTROL et V3CONTROL.

En outre, selon l'invention, l'unité 202 est apte à recevoir des tensions moteur moyennes de l'unité 205 décrite ci-après. Les tensions moteur moyennes peuvent être représentées par un vecteur V123MEAS de trois tensions notées V1MEAS, V2MEAS et V3MEAS.

Sur la base d'une comparaison entre les tensions moteur de référence V123REF et les tensions moteur moyennes V123MEAS, l'unité 202 peut déterminer des tensions moteur de correction représentées par un vecteur V123CORRECTION de trois valeurs de correction V1CORRECTION, V2CORRECTION et V3CORRECTION.

Le dispositif de commande 120 comprend en outre une unité de calcul 203 des ordres de commande de la topologie de hachage.

L'unité 203 détermine tout d'abord des tensions de commande, représentées par le vecteur V123COMMAND de trois tensions V1COMMAND, V2COMMAND et V3COMMAND sur la base des tensions de contrôle V123CONTROL.

Lors de la détermination des tensions de commande, l'unité 203 peut en outre prendre en compte une tension moteur de stratégie VSTRATEGY qui est une valeur de tension correspondant à un point neutre électrique du moteur, permettant la mise en œuvre de différentes stratégies PWM de commutation.

L'ajout d'une même valeur VSTRATEGY à toutes les phases du variateur de vitesse n'impacte pas les tensions appliquées au moteur. En effet, chaque phase du variateur de vitesse 102 fournit un potentiel Vi, i étant l'indice de la phase, et les tensions appliquées au moteur sont composées en fonction des potentiels Vi.

Dans le cas d'un montage en étoile (dont l'architecture est connue et non décrite davantage), en notant Ui l'une des tensions appliquées au moteur, on obtient :

$$Ui = Vi - (V1 + V2 + V3)/3 \ ;$$

Ainsi, la valeur Ui est invariante à une valeur VSTRATEGY qui serait ajoutée aux trois valeurs de sortie V1, V2 et V3.

Dans le cas d'un montage triangle, en notant Ui l'une des tensions appliquées au moteur, on obtient :
Ui = Vi -Vj, j étant un indice de phase différent de i ;

A nouveau, la valeur Ui est invariante à une valeur VSTRATEGY qui serait ajoutée aux trois valeurs de sortie V1, V2 et V3.

Ainsi, dans les deux cas de montages étoile et triangle, l'ajout de la valeur VSTRATEGY donne un degré de liberté pour appliquer une stratégie dédiée à différents objectifs, tels que maximiser une amplitude de tension bobine (tension composée en sortie de variateur), minimiser les commutations, etc.

L'unité 203 calcule ensuite les ordres de commande à partir de la tension redressée de chaque cellule de puissance 101, qui est la tension qui est ensuite hachée par le pont en H de la cellule de puissance 101. Toutefois, comme indiqué précédemment, une telle tension redressée n'est pas directement mesurée dans le cadre de l'invention, et une tension redressée de référence VBUSDRIVE issue d'une unité de détermination de la tension de référence 204 est initialement utilisée afin de calculer les ordres de commande.

Par exemple, à partir des tensions de commande V123COMMAND et de la tension redressée de référence VBUSDRIVE, qui est une valeur par défaut, l'unité 203 détermine des rapports de modulation représentés sous la forme d'un vecteur m123 comprenant les valeurs m1, m2 et m3. De tels rapports de modulation sont comparés à des porteuses triangulaires afin de déterminer les ordres de commutation ci-après. Chaque rapport de modulation m1, m2 et m3 peut changer N fois de valeurs sur une période de porteuse.

A partir des rapports de modulation, l'unité 203 détermine en outre des ordres de commutation des interrupteurs des ponts en H des cellules de puissance 101, les ordres de commutation étant représentés par un vecteur T123, comprenant des ordres T1, T2 et T3 respectivement pour chacune des trois phases. Les ordres Ti sont des vecteurs de commutation, chaque composante du vecteur correspondant à une cellule de puissance de la branche i.

Chacune des N composantes du vecteur de commutation Ti peut être obtenue par comparaison du vecteur de commutation mi avec la porteuse triangulaire correspondante à la phase i.

Les ordres de commande peuvent également comprendre des ordres d'activation/désactivation des interrupteurs 105 des cellules de puissance.

L'unité 203 et en outre configurée pour transmettre les ordres de commande utilisés pour commander les interrupteurs 105, afin d'activer ou désactiver certaines des cellules de puissance précédemment désactivées/activées, et/ou pour commander les cellules de commande 103 des cellules de puissance 101 actives, afin de réaliser les tensions de sortie PWM des cellules de puissance.

Les tensions sont ensuite réalisées en pratique par les cellules de puissance 101 actives du variateur de vitesse 102, et les tensions réalisées sont représentées par un vecteur V123REALIZED, comprenant les tensions V1REALIZED, V2REALIZED et V3REALIZED correspondant aux trois phases respectives.

Le dispositif de commande 120 comprend en outre une unité de calcul des tensions moteur moyennes 205. L'unité 205 est apte à recevoir des mesures continues, ou discrètes à une fréquence donnée, des tensions appliquées au moteur. A partir des mesures de tensions moteur reçues sur une période donnée, l'unité 205 détermine des tensions moteur moyennes sur la période donnée représentée par un vecteur V123MEAS comprenant les tensions V1MEAS, V2MEAS et V3MEAS pour les trois phases respectives. Une telle période peut être fixe ou variable. Par exemple, la période utilisée pour moyenner les tensions moteur peut être calculée à partir d'une période d'échantillonnage des tensions moteur de référence V123REF, ce qui est technologiquement plus facilement réalisable qu'une mesure des tensions moteur échantillonnées en fonction des temps caractéristiques de l'étage de puissance (le calcul des tensions moteur de référence et la réalisation des tensions par l'étage de puissance étant synchronisés).

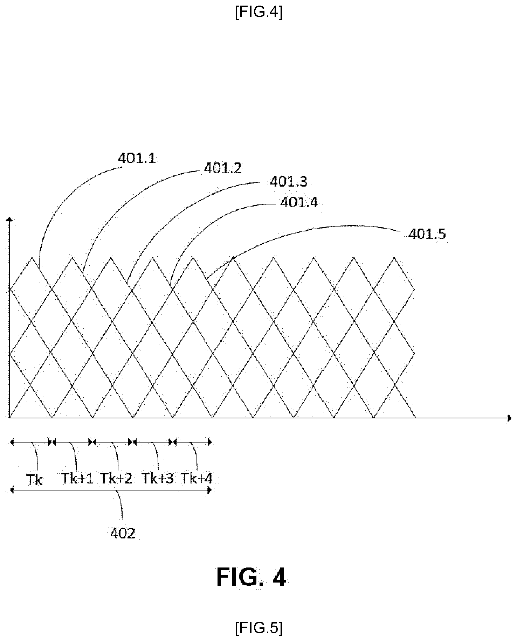

A cet effet, la figure 4 illustre la synchronisation entre le calcul des tensions moteur moyennes et la réalisation des tensions par l'étage de puissance.

La figure 4 présente un cas avec cinq cellules de puissance pour une phase du variateur de vitesse.

Les courbes 401.1 à 401.5 représentent les signaux triangulaires de base utilisés par l'unité 203 pour générer les ordres de commutations T123 par comparaison entre les rapports de modulation mi (m1, m2 ou m3) et les signaux triangulaires. Chaque signal triangulaire correspond à l'une des cellules de puissance de la phase. Une telle comparaison en vue de déterminer les ordres de commutation T123 d'un pont en H d'une cellule de puissance est bien connu et ne sera pas décrit davantage. Les signaux triangulaires sont des valeurs de tensions évoluant avec le temps (en abscisse).

Des périodes successives Tk à Tk+5 sont représentées, correspondant à un cinquième de la période 402 des signaux triangulaires. Une telle période peut correspondre à une durée pour laquelle, en moyenne, la même puissance active est tirée de chacun des trois bras du variateur de vitesse. Lors de la période Tk+1 :

- les tensions de référence, V123REF, de contrôle V123CONTROI et de commande V123COMMAND et les ordres de commande T123 sont calculés sur la base des tensions moteur moyennes et de la tension redressée moyenne issues de la période Tk ;
- les ordres de commande T123 calculés à l'étape Tk précédente sont appliquées aux cellules de puissance en vue de réaliser les tensions ;
- les tensions moteur moyenne et la tension redressée moyenne sont calculées sur toute l'étape Tk+1 pour être utilisées à l'étape suivante Tk+2.

Ainsi, la fréquence d'échantillonnage des tensions moteur de référence V123REF peut correspondre à la fréquence de réalisation des tensions PWM (fréquence de signaux triangulaires permettant de réaliser la modulation PWM dans les cellules de puissance 101). Une telle fréquence peut être fixe ou peut varier. Par exemple, des facteurs influençant la fréquence d'échantillonnage peuvent être :

- une protection thermique de l'étage de puissance en fonction de l'état thermique du variateur de vitesse 102 ;
- la protection des ponts en H des cellules de puissance 101, comprenant des interrupteurs IGBT, la fréquence PWM étant ajustée en fonction des températures de jonction des interrupteurs IGBT ;

- lors du passage d'une commande triphasée à une commande biphasée ; et/ou
- l'application d'une composante aléatoire à la fréquence PWM afin de réduire le bruit.

Le dispositif de commande 120 comprend en outre une unité de calcul de la tension redressée moyenne 206, apte à calculer une valeur de tension redressée moyenne VBUS à partir des tensions moteur moyennes. Deux modes de réalisation du calcul de la tension redressée moyenne sont données ci-après, à titre illustratif.

Premier mode de réalisation :

Selon le premier mode de réalisation, les tensions moteur de référence V123REF sont appliquées sans corrections liées aux tensions moyennes mesurées V123MEAS. Les tensions de correction V123CORRECTION ne sont donc pas prises en compte. Selon ce premier mode de réalisation, la tension redressée moyenne VBUS est calculée en outre à partir des tensions moteur de référence et de la tension redressée de référence, ce qui ressort des calculs détaillés ci-après.

Les relations d'équilibre entre les différentes tensions du système selon le premier mode de réalisation sont :

V123CONTROL=V123REF (les tensions de correction V123CORRECTION ne sont pas appliquées) ;

V123CORRECTION=V123REF-V123MEAS (un tel calcul est optionnel puisque les tensions de correction V123CORRECTION ne sont pas utilisées) ;

$$\text{V123COMMAND} = \text{V123 CONTROL} + (\text{V123COMPENSATION} + \text{VSTRATEGY}) \text{ ;}$$

V123COMPENSATION est un vecteur de compensation comprenant trois composantes V1COMPENSATION, V2COMPENSATION et V3COMPENSATION; un tel vecteur permet de compenser des chutes intrinsèques à des composantes de puissance, notées VDROP ci-après. De telles chutes de tension se produisent dans les interrupteurs IGBT, dans les diodes et également en raison de temps morts introduits afin d'éviter des courts-circuits dans l'onduleur. De manière alternative, les valeurs de compensation étant de faibles amplitudes, elles peuvent être négligées à moyenne et grande tension (à moyenne et grande vitesses).

$$\text{V123COMMAND/ VBUSDRIVE} = \text{m123 ;}$$

$$\text{m123} * \text{VBUS} - \text{V123DROP} = \text{V123REALIZED ;}$$

(VBUS est la tension redressée moyenne à déterminer et V123DROP est un vecteur de trois composantes V1DROP, V2DROP et V3DROP représentant la chute de tension dans l'étage de puissance pour chacune des trois phases) ;

$$\text{V123MEAS} = \text{V123REALIZED} - \text{VNO ;}$$

VNO est une valeur de tension correspondant au point neutre de l'unité de mesure. Une telle valeur peut être connue à l'avance par exemple, par étalonnage.

A partir des relations d'équilibre précédentes, les relations suivantes sont obtenues :

$$\text{V123CORRECTION} = \text{V123REF} - \text{V123MEAS ;}$$

$$\text{V123COMMAND} = \text{V123REF} + (\text{V123COMPENSATION} + \text{VSTRATEGY}) \text{ ;}$$

$$\text{m123} = \text{V123REF / VBUSDRIVE} + (\text{V123COMPENSATION} + \text{VSTRATEGY}) / \text{VBUSDRIVE;}$$

V123REALIZED = V123REF * gV + (V123COMPENSATION + VSTRATEGY) * gV − V123DROP;

V123MEAS = V123REF * gV + (V123COMPENSATION + VSTRATEGY) * gV − V123DROP − VNO;

(gV étant le rapport VBUS/VBUSDRIVE à déterminer à l'issue du procédé selon l'invention).

En définissant oV = (V123COMPENSATION + VSTRATEGY) * gV -V123DROP - VNO, les relations ci-dessus se simplifient en :

V123MEAS = V123REF*gV + oV ;

V123CONTROL = V123REF (fonctionnement de l'unité 202 selon le premier mode de réalisation) ;

V123CORRECTION = (1-gV) * V123REF − oV.

oV peut être considéré comme un décalage, ou « offset », représentatif des imperfections de l'étage de puissance. Si les imperfections sont compensées, oV s'approche de 0.

Dans ce cas, gV = V123MEAS/V123REF, et la valeur VBUS peut ainsi être déterminée.

Le ratio présenté ci-dessus et permettant d'accéder à gV correspond au ratio de l'amplitude du vecteur V123MEAS sur l'amplitude du vecteur V123REF.

Par exemple, il peut être considéré des transformations de type Clarke permettant de transformer un vecteur triphasé en un vecteur biphasé (souvent noté (alpha, beta)).

On peut ainsi transformer le vecteur triphasé de composantes suivantes:

V1 = V cos( wt - phi) + VN;

V2 = V cos( wt - phi − 2 pi/3 ) + VN;

V3 = V cos( wt - phi − 4 pi/3 ) + VN.

En un système biphasé :

Valpha = V cos(wt − phi) ;

Vbeta = V sin(wt − phi).

De ce système biphasé, il peut être déduit des coordonnées polaires :

V_amplitude = V (qui correspond à l'amplitude à laquelle il est fait référence pour le rapport gV) ;

V_phase = wt − phi.

Deuxième mode de réalisation :

Selon le deuxième mode de réalisation, l'unité 202 régule les tensions moteur mesurées V123MEAS aux tensions moteur de référence V123REF, en calculant les tensions moteur de correction V123CORRECTION, l'unité 203 appliquant les tensions moteur de correction V123CORRECTION lors de la détermination des tensions de contrôle V123CONTROL.

Selon le deuxième mode de réalisation, la tension redressée moyenne VBUS est calculée comme pour le premier mode (donc sur la base des tensions moteur mesurées V123MEAS et des tensions moteur de référence V123REF), ou en remplaçant les tensions moteur moyennes V123MEAS ou les tensions moteur de référence V123REF par les tensions moteur de correction V123CORRECTION ou par les tensions de commande V123COMMAND, comme détaillé dans les calculs ci-après.

Les relations d'équilibre s'écrivent :

$$V123REF = V123MEAS \; ;$$

$$V123CONTROL = V123REF + V123CORRECTION \; ;$$

$$V123COMMAND = V123CONTROL + V123COMPENSATION + VSTRATEGY \; ;$$

$$V123COMMAND / VBUSDRIVE = m123 \; ;$$

$$m123 * VBUS - V123DROP = V123REALIZED \; ;$$

$$V123MEAS = V123REALIZED - VNO.$$

Soit :

$$V123MEAS = V123REF;$$

$$V123CONTROL = V123REF + V123CORRECTION;$$

$$V123COMMAND = V123REF + V123CORRECTION + V123COMPENSATION + VSTRATEGY;$$

$$m123 = V123REF/VBUSDRIVE + (V123CORRECTION + V123COMPENSATION + VSTRATEGY) / VBUSDRIVE;$$

$$V123REALIZED = V123REF * gV + (V123CORRECTION + V123COMPENSATION + VSTRATEGY) * gV - V123DROP - VNO$$

En définissant oV de la même manière que pour le premier mode de réalisation, les relations se simplifient en :

$$V123CORRECTION = (V123REF*(1-gV) - oV) / gV \; ;$$

$$V123MEAS = V123REF;$$

$$V123CONTROL = V123REF/gV - oV/gV.$$

Dans le cas où l'offset oV est nul, c'est à dire que les imperfections de l'étage de puissance sont parfaitement compensées, on obtient :
gV = V123MEAS/V123CONTROL, et la valeur VBUS peut ainsi être déterminée.

Une fois la tension redressée moyenne VBUS déterminée, selon l'un quelconque des modes de réalisation de l'invention, la tension redressée moyenne VBUS peut être utilisée par l'unité 204 en remplacement de la tension redressée de référence VBUSDRIVE pour la période suivante. Par exemple, la tension VBUS peut remplacer la tension redressée de référence VBUSDRIVE dans une mémoire de l'unité 204.

En fonction de la valeur de tension redressée moyenne VBUS, le couple moteur peut être piloté afin de contrôler la décélération. Par exemple, les tensions moteur de référence V123REF peuvent être pilotées par une unité 207. Par exemple, si la tension redressée moyenne VBUS est inférieure à un premier seuil th1, la décélération du moteur peut être augmentée. Si la tension redressée moyenne est comprise entre le premier seuil th1 et un deuxième seuil th2, le deuxième seuil th2 étant une tension limite acceptable pour les capacités des cellules de puissance 101, la décélération peut être progressivement diminuée afin de ne pas réinjecter de l'énergie que ne peut plus être stockée ou dissipée. Si la tension redressée moyenne est supérieure à th2, alors le variateur de vitesse 102 arrête de commander le moteur afin de protéger le variateur de vitesse 102.

Les valeurs th1 et th2 peuvent être prédéterminées. En variante ou en complément, la comparaison de la valeur de tension redressée moyenne VBUS peut être comparée avec les seuils th1 et th2 afin de contrôler la fréquence d'alimentation du dispositif électrique.

La figure 3 illustre la structure des unités du dispositif de commande selon un mode de réalisation de l'invention.

Chacune des unités présentées précédemment en référence à la figure 2 peut comprendre la structure illustrée sur la figure 3. De manière alternative, chacune de ces unités, ou certaines d'entre elles, peut être sous la forme d'un circuit électronique dédié à la réalisation de la fonction qui lui est propre. Un tel circuit électronique dédié peut être un microcontrôleur ou un ASIC monolithique configuré pour la fonction qui lui est propre.

L'unité comprend un processeur 300 apte à communiquer de manière bidirectionnelle, via des bus, avec une mémoire 301 telle qu'une mémoire vive RAM, une mémoire morte ROM, une mémoire flash, un disque dur et/ou tout type de médium de stockage. Le processeur 300 est apte à exécuter des instructions pour la réalisation de la fonction qui lui est propre. L'unité comprend en outre une interface d'entrée 302 et une interface de sortie 303 afin de communiquer avec les autres entités du dispositif de commande, à recevoir des mesures de tension, à transmettre/recevoir des commandes.

L'unité peut en outre comprendre une base de données pour le stockage des données utilisées pour la réalisation de la fonction qui est propre à l'unité.

Selon une variante, le processeur 300 peut réaliser les fonctions de l'ensemble des unités 201 à 207 décrites précédemment en référence à la figure 2.

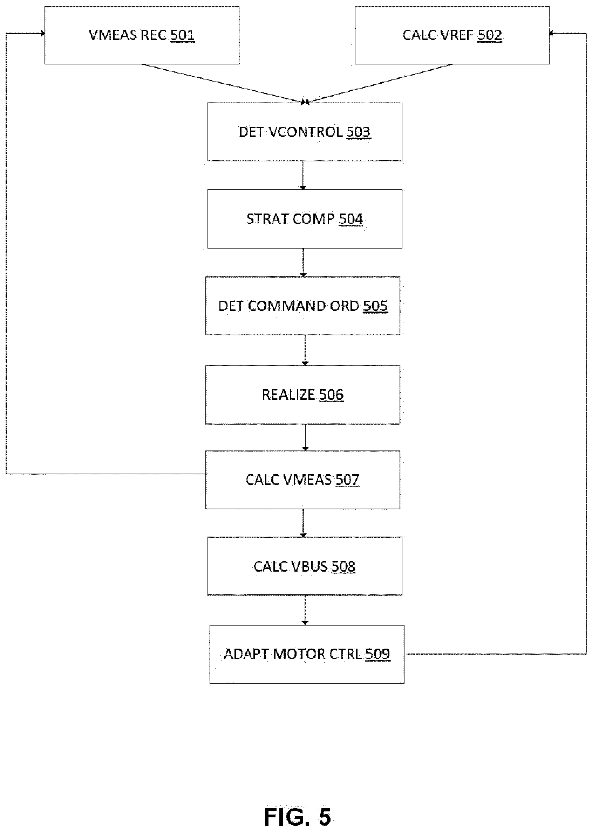

La figure 5 est un diagramme illustrant les étapes d'un procédé selon plusieurs modes de réalisation de l'invention.

Les étapes 501 à 509 sont mises en œuvre lors d'une période courante consécutive à une période précédente.

A une étape 501, l'unité 201 reçoit une tension moyenne moteur issue de mesures effectuées sur la période précédente, comme détaillé en référence à la figure 2.

En parallèle, à l'étape 502, l'unité 201 peut calculer des tensions moteur de référence V123REF, comme détaillé en référence à la figure 2.

A une étape 503, l'unité 202 détermine des tensions de contrôle V123CONTROL, selon le premier mode de réalisation (en recopiant les tensions moteur de référence V123REF) ou selon le deuxième mode de réalisation de l'invention (en prenant en considération les tensions de correction V123CORRECTION).

A une étape 504, l'unité 203 peut utiliser les tensions VSTRATEGY et V123COMPENSATION pour déterminer des tensions de commande V123COMMAND à partir des tensions de contrôle V123CONTROL, une telle étape étant optionnelle, les tensions de commande V123COMMAND pouvant être déduites directement des tensions de contrôle V123CONTROL.

A une étape 505, l'unité 203 détermine les ordres de commande de l'étage de puissance T123, comme détaillé ci-avant.

Les ordres de commande T123 sont ensuite transmis aux trois branches de l'étage de puissance pour la réalisation des tensions moteur V123REALIZED à une étape 506.

A une étape 507, sur réception des mesures de tensions moteur, les tensions moteur moyennes V123MEAS sont déterminées par l'unité 205, comme détaillé ci-avant. Les tensions moteur moyennes V123MEAS déterminées peuvent être utilisées lors de l'étape 501 d'une période suivante consécutive à la phase courante.

A une étape 508, la tension redressée moyenne VBUS peut être déterminée par l'unité 206 comme détaillé ci-dessus. La tension redressée moyenne VBUS peut remplacer la tension redressée de référence VBUSDRIVE dans l'unité 204.

A une étape 509, le contrôle du moteur est adapté en fonction de la tension redressée moyenne VBUS. Par exemple, un tel contrôle peut comprendre le remplacement de la tension redressée de référence VBUSDRIVE par la tension redressée moyenne VBUS et/ou la modification de la fréquence du moteur ou des tensions moteur de référence V123REF par l'unité 207 (retour à l'étape 502 pour la période suivante), soit en modifiant le couple moteur.

Bien que la présente invention ait été décrite ci-dessus en référence à des modes de réalisation particuliers, l'invention ne se limite aucunement aux formes décrites. L'invention est uniquement limitée par ce qui est défini dans les revendications et d'autres modes de réalisation que ceux décrits ci-dessus peuvent entrer dans la portée des revendications.

## Revendications

1. Procédé d'adaptation d'une décélération d'un moteur (100) alimenté par un variateur de vitesse (102), le variateur de vitesse comprenant une pluralité d'au moins N cellules de puissance (101) basse tension reliées en série, N étant supérieur ou égal à 1, **caractérisé en ce que** le procédé comprend les opérations suivantes lors d'une période de décélération du moteur :

   - détermination (507) d'au moins une tension moteur moyenne sur une période donnée en fonction de valeurs de tensions moteur mesurées aux bornes du moteur sur la période donnée ;
   - en fonction de la tension moteur moyenne déterminée, détermination (508) d'une valeur de tension redressée moyenne, dans lequel une tension redressée correspond à une tension obtenue en sortie d'un redresseur de chaque cellule de puissance;
   - adaptation (509) de la décélération du moteur en fonction de la valeur de tension redressée moyenne.

2. Procédé selon la revendication 1, dans lequel la détermination (508) de la valeur de tension redressée moyenne est fonction de la tension moteur moyenne, d'une tension moteur de référence et d'une tension redressée de référence, la tension moteur de référence étant issue d'une commande reçue en entrée du variateur de vitesse (102) et la tension redressée de référence étant une valeur par défaut.

3. Procédé selon la revendication 1, dans lequel le procédé comprend la détermination (502) d'au moins une tension moteur de référence, dans lequel la tension moteur de référence est asservie à la tension moteur moyenne mesurée par génération d'une tension moteur de correction, une tension moteur de contrôle étant obtenue à partir de la tension moteur de référence et de la tension de correction,
   dans lequel la tension redressée moyenne est obtenue à partir de la tension moteur moyenne, de la tension moteur de contrôle et d'une tension redressée de référence, la tension redressée de référence étant une valeur par défaut.

4. Procédé selon l'une des revendications précédentes, dans lequel l'adaptation (509) de la décélération comprend la comparaison de la tension redressée moyenne avec au moins un seuil prédéfini, et la modification d'un couple appliqué au moteur en fonction d'un résultat de la comparaison.

5. Procédé selon la revendication 4, dans lequel le seuil est prédéfini en fonction d'une tension maximale des capacités des cellules de puissance du variateur de vitesse (102).

6. Procédé selon l'une des revendications précédentes, dans lequel l'adaptation de la décélération comprend le remplacement, pour une période suivante, d'une tension redressée de référence par la tension redressée moyenne afin de déterminer des ordres de commande des cellules de puissance (101) du variateur de vitesse (102), la tension redressée de référence étant une valeur par défaut.

7. Procédé selon l'une des revendications précédentes, dans lequel la période donnée est égale à une période d'échantillonnage d'une tension moteur de référence en entrée du variateur de vitesse (102).

8. Procédé selon l'une des revendications précédentes, dans lequel le variateur de vitesse comprend 3*N cellules de puissance, avec trois phases comprenant chacune N cellules de puissance reliées en série, dans lequel des sorties respectives de chaque phase sont reliées en étoile ou en triangle au moteur électrique.

9. Procédé selon la revendication 8, dans lequel des ordres de commande des cellules de puissance sont déterminées à partir d'une tension moteur de référence et à partir d'une tension additionnelle de stratégie commune aux trois phases, la tension additionnelle de stratégie étant déterminée de manière à minimiser un nombre de commutations d'interrupteurs des cellules de puissance.

**10.** Programme d'ordinateur exécutable par un processeur (300) et comprenant des instructions pour, lorsqu'il est exécuté par le processeur, mettre en œuvre les étapes d'un procédé selon l'une des revendications 1 à 9.

**11.** Dispositif de commande pour l'adaptation de la décélération d'un moteur (100) alimenté par un variateur de vitesse (102), le variateur de vitesse comprenant N cellules de puissance (101) basse tension reliées en série, N étant supérieur ou égal à 1, **caractérisé en ce que** le dispositif de commande comprend :

- une unité (205) configurée pour, lors d'une période de décélération du moteur, déterminer d'au moins une tension moteur moyenne sur une période donnée en fonction de valeurs de tensions moteur mesurées aux bornes du moteur sur la période donnée ;
- une unité (206) configurée pour déterminer, en fonction de la tension moteur moyenne déterminée, une valeur de tension redressée moyenne, dans lequel une tension redressée correspond à une tension obtenue en sortie d'un redresseur de chaque cellule de puissance;
- une unité (204 ; 207) configurée pour adapter de la décélération du moteur en fonction de la valeur de tension redressée moyenne.

## Patentansprüche

**1.** Verfahren zur Anpassung einer Verzögerung eines Motors (100), der von einem Umrichter (102) versorgt wird, wobei der Umrichter eine Mehrzahl von mindestens N Niederspannungs-Leistungszellen (101) umfasst, die in Reihe geschaltet sind, wobei N größer als oder gleich 1 ist, **dadurch gekennzeichnet, dass** das Verfahren bei einer Verzögerungsperiode des Motors die folgenden Vorgänge umfasst:

- Bestimmen (507) mindestens einer durchschnittlichen Motorspannung über eine bestimmte Periode je nach Motorspannungswerten, die über die bestimmte Periode an den Klemmen des Motors gemessen werden;
- je nach der bestimmten durchschnittlichen Motorspannung, Bestimmen (508) eines Werts einer durchschnittlichen gleichgerichteten Spannung, wobei eine gleichgerichtete Spannung einer Spannung entspricht, die am Ausgang eines Gleichrichters jeder Leistungszelle erhalten wird;
- Anpassen (509) der Verzögerung des Motors je nach dem Wert der durchschnittlichen gleichgerichteten Spannung.

**2.** Verfahren nach Anspruch 1, wobei das Bestimmen (508) des Werts der durchschnittlichen gleichgerichteten Spannung von der durchschnittlichen Motorspannung, einer Referenzmotorspannung und einer gleichgerichteten Referenzspannung abhängig ist, wobei die Referenzmotorspannung aus einem Befehl hervorgeht, der am Eingang des Umrichters (102) empfangen wird, und die gleichgerichtete Referenzspannung ein Standardwert ist.

**3.** Verfahren nach Anspruch 1, wobei das Verfahren das Bestimmen (502) mindestens einer Referenzmotorspannung umfasst, wobei die Referenzmotorspannung gemäß der gemessenen durchschnittlichen Motorspannung durch Erzeugung einer Korrekturmotorspannung geregelt wird, wobei eine Steuerungs-Motorspannung anhand der Referenzmotorspannung und der Korrekturmotorspannung erhalten wird,
wobei die durchschnittliche gleichgerichtete Spannung anhand der durchschnittlichen Motorspannung, der Steuerungs-Motorspannung und einer gleichgerichteten Referenzspannung erhalten wird, wobei die gleichgerichtete Referenzspannung ein Standardwert ist.

**4.** Verfahren nach einem der vorhergehenden Ansprüche, wobei das Anpassen (509) der Verzögerung das Vergleichen der durchschnittlichen gleichgerichteten Spannung mit mindestens einer vorgegebenen Schwelle und das Ändern eines Drehmoments, das an den Motor angelegt ist, je nach einem Ergebnis des Vergleichs umfasst.

**5.** Verfahren nach Anspruch 4, wobei die Schwelle je nach einer Höchstspannung der Kapazitäten der Leistungszellen des Umrichters (102) vorgegeben ist.

**6.** Verfahren nach einem der vorhergehenden Ansprüche, wobei das Anpassen der Verzögerung das Ersetzen einer gleichgerichteten Referenzspannung durch die durchschnittliche gleichgerichtete Spannung für eine folgende Periode umfasst, um Befehle zur Steuerung der Leistungszellen (101) des Umrichters (102) zu bestimmen, wobei die gleichgerichtete Referenzspannung ein Standardwert ist.

7. Verfahren nach einem der vorhergehenden Ansprüche, wobei die bestimmte Periode gleich einer Abtastperiode einer Referenzmotorspannung am Eingang des Umrichters (102) ist.

8. Verfahren nach einem der vorhergehenden Ansprüche, wobei der Gleichrichter 3*N Leistungszellen umfasst, mit drei Phasen, die jeweils N Leistungszellen umfassen, die in Reihe geschaltet sind, wobei jeweilige Ausgänge jeder Phase stern- oder dreieckförmig mit dem Elektromotor verbunden sind.

9. Verfahren nach Anspruch 8, wobei Befehle zur Steuerung der Leistungszellen anhand einer Referenzmotorspannung und anhand einer zusätzlichen Strategiespannung, die den drei Phasen gemein ist, bestimmt werden, wobei die zusätzliche Strategiespannung so bestimmt wird, dass eine Anzahl von Umschaltungen von Schaltern der Leistungszellen minimiert wird.

10. Computerprogramm, das von einem Prozessor (300) ausführbar ist und Anweisungen umfasst, um bei Ausführung durch den Prozessor die Schritte eines Verfahrens nach einem der Ansprüche 1 bis 9 durchzuführen.

11. Steuerungsvorrichtung zur Anpassung der Verzögerung eines Motors (100), der von einem Umrichter (102) versorgt wird, wobei der Umrichter N Niederspannungs-Leistungszellen (101) umfasst, die in Reihe geschaltet sind, wobei N größer als oder gleich 1 ist, **dadurch gekennzeichnet, dass** die Steuerungsvorrichtung Folgendes umfasst:

- eine Einheit (205), die dazu ausgebildet ist, bei einer Verzögerungsperiode des Motors mindestens eine durchschnittliche Motorspannung über eine bestimmte Periode je nach Motorspannungswerten zu bestimmen, die über die bestimmte Periode an den Klemmen des Motors gemessen werden;
- eine Einheit (206), die dazu ausgebildet ist, je nach der bestimmten durchschnittlichen Motorspannung einen Wert einer durchschnittlichen gleichgerichteten Spannung zu bestimmen, wobei eine gleichgerichtete Spannung einer Spannung entspricht, die am Ausgang eines Gleichrichters jeder Leistungszelle erhalten wird;
- eine Einheit (204; 207), die dazu ausgebildet ist, die Verzögerung des Motors je nach dem Wert der durchschnittlichen gleichgerichteten Spannung anzupassen.

**Claims**

1. Method for adapting a deceleration of a motor (100) powered by a variable speed drive (102), the variable speed drive comprising a plurality of at least N low-voltage power cells (101) linked in series, N being greater than or equal to 1, the method comprising the following operations during a period of deceleration of the motor:

- determination (507) of at least one average motor voltage over a given period as a function of motor voltage values measured at the terminals of the motor over the given period;
- as a function of the determined average motor voltage, determination (508) of an average rectified voltage value, wherein a rectified voltage corresponds to a voltage obtained at the output of a rectifier of each power cell;
- adaptation (509) of the deceleration of the motor as a function of the average rectified voltage value.

2. Method according to Claim 1, wherein the determination (508) of the average rectified voltage value is a function of the average motor voltage, of a reference motor voltage and of a reference rectified voltage, the reference motor voltage being obtained from a command received at the input of the variable speed drive (102) and the reference rectified voltage being a default value.

3. Method according to Claim 1, wherein the method comprises the determination (502) of at least one reference motor voltage, wherein the reference motor voltage is interlocked with the average motor voltage measured by generation of a correction motor voltage, a control motor voltage being obtained from the reference motor voltage and from the correction voltage,
wherein the average rectified voltage is obtained from the average motor voltage, from the control motor voltage and from a reference rectified voltage, the reference rectified voltage being a default value.

4. Method according to one of the preceding claims, wherein the adaptation (509) of the deceleration comprises the comparison of the average rectified voltage with at least one predefined threshold, and the modification of a torque applied to the motor as a function of a result of the comparison.

5. Method according to Claim 4, wherein the threshold is predefined as a function of a maximum voltage of the capacitors of the power cells of the variable speed drive (102).

6. Method according to one of the preceding claims, wherein the adaptation of the deceleration comprises the replacement, for a subsequent period, of a reference rectified voltage by the average rectified voltage in order to determine command orders for the power cells (101) of the variable speed drive (102),
the reference rectified voltage being a default value.

7. Method according to one of the preceding claims, wherein the given period is equal to a sampling period of a reference motor voltage at the input of the variable speed drive (102).

8. Method according to one of the preceding claims, wherein the variable speed drive comprises 3*N power cells, with three phases each comprising N power cells linked in series, wherein respective outputs of each phase are linked in star configuration or delta configuration to the electric motor.

9. Method according to Claim 8, wherein command orders of the power cells are determined from a reference motor voltage and from an additional strategy voltage common to the three phases, the additional strategy voltage being determined so as to minimize a number of switchovers of switches of the power cells.

10. Computer program that can be executed by a processor (300) and comprising instructions for, when it is executed by the processor, implementing the steps of a method according to one of Claims 1 to 9.

11. Control device for adapting the deceleration of a motor (100) powered by a variable speed drive (102), the variable speed drive comprising N low-voltage power cells (101) linked in series, N being greater than or equal to 1, **characterized in that** the control device comprises:

- a unit (205) configured to, during a period of deceleration of the motor, determine at least one average motor voltage over a given period as a function of motor voltage values measured at the terminals of the motor over the given period;
- a unit (206) configured to determine, as a function of the determined average motor voltage, an average rectified voltage value, wherein a rectified voltage corresponds to a voltage obtained at the output of a rectifier of each power cell;
- a unit (204; 207) configured to adapt the deceleration of the motor as a function of the average rectified voltage value.

[FIG.1]

FIG. 1

[FIG.2] [FIG.3]

FIG. 2

FIG. 3

[FIG.4]

401.1

401.2

401.3

401.4

401.5

Tk   Tk+1 Tk+2 Tk+3 Tk+4

402

# FIG. 4

[FIG.5]

```
┌─────────────────────────┐                    ┌─────────────────────────┐
│   VMEAS REC 501         │                    │    CALC VREF 502        │
└─────────────────────────┘                    └─────────────────────────┘
                    │                               │
                    └──────────────┬────────────────┘
                                   ▼
                       ┌─────────────────────────┐
                       │   DET VCONTROL 503      │
                       └─────────────────────────┘
                                   │
                                   ▼
                       ┌─────────────────────────┐
                       │   STRAT COMP 504        │
                       └─────────────────────────┘
                                   │
                                   ▼
                       ┌─────────────────────────┐
                       │ DET COMMAND ORD 505     │
                       └─────────────────────────┘
                                   │
                                   ▼
                       ┌─────────────────────────┐
                       │   REALIZE 506           │
                       └─────────────────────────┘
                                   │
                                   ▼
                       ┌─────────────────────────┐
                       │   CALC VMEAS 507        │
                       └─────────────────────────┘
                                   │
                                   ▼
                       ┌─────────────────────────┐
                       │   CALC VBUS 508         │
                       └─────────────────────────┘
                                   │
                                   ▼
                       ┌─────────────────────────┐
                       │ ADAPT MOTOR CTRL 509    │
                       └─────────────────────────┘
```

# FIG. 5

**EP 3 672 059 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 10008937 B